# EUROPEAN PATENT SPECIFICATION

(11) **EP 1 839 194 B1**
(45) Date of publication and mention of the grant of the patent: **10.08.2011**
(21) Application number: 04809220.9
(22) Date of filing: 29.12.2004
(51) Int. Cl.: G06F 17/30, H04M 3/22

(54) **INTERCEPTION OF DATABASES**
ABFANG VON DATENBANKEN
INTERCEPTION DE BASES DE DONNEES

(43) Date of publication of application: 03.10.2007
(73) Proprietor: Telefonaktiebolaget L- M Ericsson (publ), 164 83 Stockholm (SE)
(72) Inventor: IMBIMBO, Amedeo, I-80023 Caivano (IT)
(74) Representative: Sjöberg, Mats Hakan
(86) International application number: PCT/SE2004/002047
(87) International publication number: WO 2006/071157

(56) References cited:
- WO-A1-2004/010649
- US-A1- 2002 068 582
- US-A1- 2002 174 129
- US-A1- 2004 148 285
- US-B2- 6 711 689

## Description

### TECHNICAL FIELD OF THE INVENTION

The present invention relates to methods and arrangements in a communication system to provide information related to use of a directory object in a database.

### DESCRIPTION OF RELATED ART

In modern communication networks different databases are important elements. They provide support for all kind of applications that could be distributed on different Application Servers. One example of data is user data for a subscriber, e.g. if the user has a call forwarding service activated.

One example of a database in a communication network is the Home Subscriber Server. It is, as defined in 3GPP R6, the master database for GSM and WCDMA users. It provides support for user security, authorization, mobility management, roaming, identification and service provisioning for Circuit Switched (CS) domain, for Packet Switched (PS) domain, for WLAN access to WCDMA (as defined in 3GPPP R6) and for the IP Multimedia subsystem. The Home Subscriber Server could be used for any application developed in the Service Layer. An Application Server in the Service Layer could ask for and receive data, for the execution of a certain service, from the Home Subscriber Server, e.g. what kind of service that is activated on the users subscription.

A subscriber may have the possibility to modify its user data (e.g. activation of call forwarding service) by dialling a specific code or number. The signalling from the user equipment to the database goes through the local exchange in case of a fixed line or the MSC node in case of a mobile user.

It is also possible to let the user, the subscriber, to have access to its user data in a database server via an Application Server in the Service Layer. The access to the Application Server could for example be via Internet Networks. The procedures between the Application Server and the data base server can be executed by means of, for example, the LDAP protocol or the Sh interface based on the Diameter Protocol.

There is a demand to monitor access and use of services in a database at the same level of security and confidentiality as known from traditional communication services.

One way to monitor Communication Services is Lawful Interception, i.e. the act of intercepting a communication on behalf of a Law Enforcement Agency. Interception of traditional communications Content of Communication i.e. speech and data is known. Interception of Intercept Related Information is also known. Intercept Related Information is defined as signalling information related to target subscribers, for example call establishment. As an example, in Circuit Switching domain, the sending of IRI to a monitoring function is triggered by the following call-related and non-call related events:
- Call Establishment
- Answer
- Supplementary Service
- Handover
- Release
- Subscriber Controlled Input

Appropriate session related and session unrelated events trigger the sending of IRI to a monitoring function in case of Packet Switching communication.

The procedures used by the subscriber to modify its user data in the database (e.g. activation of call forwarding service) are today intercepted in the fixed local exchange for fixed line subscribers or in the MSC node for mobile users.

According to current Lawful Interception standards, it is not possible to report, by means of existing Intercept Related Information events, the access and use of services in a database when the database is accessed via an Application Server in the Service Layer.

### SUMMARY OF THE INVENTION

The present invention relates to problems how to generate information related to access and use of a directory object in a database.

The problems are solved by associate an Interception Access Point IAP to the directory object in a database and generate new properly structured information.

In more detail the problems are solved by a method according to claim 1 and an arrangement according to claim 1 in a communication system to generate information related to use of the monitored directory object in a database. The system provides the information to an Intercept Configuration Unit ICU. The information is collected from the IAP, which is associated to the monitored directory object in the HSS. The method comprises the following step:
- receiving to the Interception Access Point IAP a request to monitor the directory object in the database,
- detection of use of the monitored directory object in the IAP,
- delivering information related to said use, from the IAP to the Intercept Configuration Unit ICU

Advantages of the invention are that use of a directory object in a database can be monitored.

The invention will now be described more in detail with the aid of preferred embodiments in connection with the enclosed drawings.

### BRIEF DESCRIPTION OF THE DRAWINGS

Figure 1 discloses a block schematic illustration of a communication system comprises a Home Subscriber Server HSS, an Application Server and an Intercept Configuration Unit ICU.
Figure 2 discloses a block schematic illustration of an Intercept Configuration Unit ICU in the communication system.
Figure 3 discloses a flow chart illustrating some essential method steps of the invention.

### DETAILED DESCRIPTION OF EMBODIMENTS

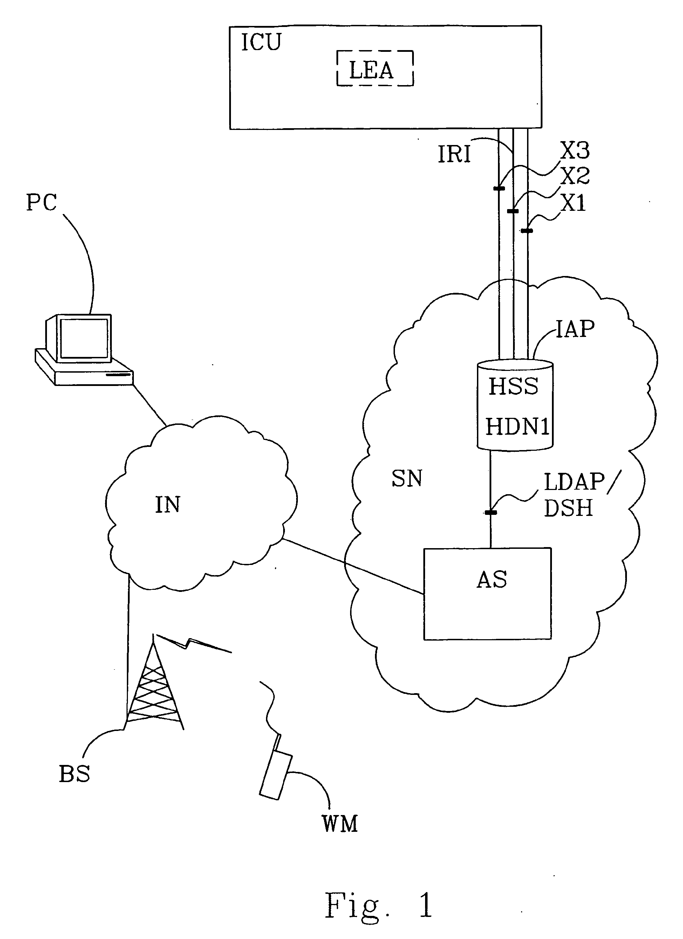

Figure 1 discloses a communication system comprising a Service Network SN. The SN hosts a Home Subscriber Server HSS and an Application Server AS.

The Application Server AS could host all kind of services and subscription for a user. The Home Subscriber Server HSS is, as defined in 3GPP R6, the master database for GSM and WCDMA users. It provides support for user security, authorization, mobility management, roaming, identification and service provisioning for Circuit Switched (CS) domain, for Packet Switched (PS) domain, for WLAN access to WCDMA (as defined in 3GPPP R6) and for the IP Multimedia subsystem. The HSS could be used for any application developed in the Service Layer. An Application Server in the Service Layer could ask for and receive data, for the execution of a certain service, from the HSS, e.g. what kind of service that is activated on the users subscription. The data for a specific user is stored under a directory object that has a unique name, HSS directory name, i.e. subscriber profile name. A directory object with the HSS directory name HDN1 is stored in the HSS. HDN1 comprises at least some user data for a subscriber or user. The HSS is configured as an Interception Access Point IAP.

The Application Server AS can communicate with the Home Subscriber Server HSS by the means of the protocol LDAP or Diameter-Sh DSH. Other protocols could also be used.

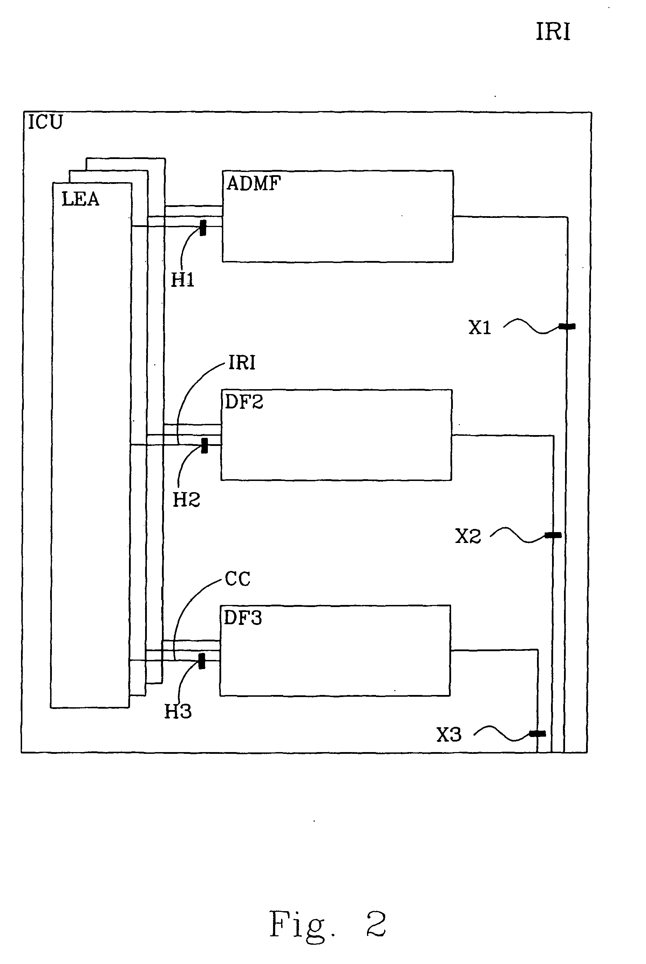

An Intercept Configuration Unit ICU is connected to the HSS/IAP. The ICU is connected to the node via three interfaces X1, X2 and X3. The ICU and the interfaces will be further explained in figure 2.

The communication network also comprises Internet Networks IN. A computer PC is connected to the IN.

A WAP-mobile WM is also connected to the Internet Networks IN via a bas station BS.

The Intercept Configuration Unit ICU is disclosed in figure 2. The ICU comprises at least one Law Enforcement Agency LEA (three blocks representing different LEAs are shown in figure 2). Each LEA is connected, via interfaces H1-H3, to three Mediation Functions respectively for ADMF, DF2 and DF3, i.e. an Administration Function ADMF and two Delivery Functions, a so-called second Delivery Function DF2 and third Delivery Function DF3. LEA is connected to the ADMF via interface H1, to the DF2 via interface H2 and to the DF3 via interface H3. The Administration Function and the Delivery Functions are each one connected to the communication network via the interfaces X1-X3. The ADMF is connected via the interface X1, DF2 is connected via X2 and DF3 is connected via X3. The Administration Function ADMF is together with the delivery functions used to hide from the network that there might be multiple activations by the different Law Enforcement Agencies. The messages sent from the ADMF to the network via the X1 interface comprise identities of the subscriber/equipment that is to be monitored, i.e. target identities. The second Delivery Function DF2 receives Intercept Related Information IRI from the network and DF2 is used to distribute the IRI to relevant Law Enforcement Agencies. The third Delivery Function DF3 receives Content of Communication CC, i.e. speech and data, and is used to distribute the CC to relevant LEAs. DF3 is responsible for call control signalling and bearer transport for an intercepted product.

Intercept Related Information IRI, received by DF2, is defined as signalling information related to monitored subscriptions.

Sending of Intercept Related Information IRI to a monitoring function is triggered by Events, these are either call related or non-call related. Call establishment is an example of a call related Event and Location update is an example of a non-call related Event. Access to a directory object, e.g. user data of a subscriber, in a HSS is an Event that could trigger the sending of IRI to the ICU.

According to an embodiment of the invention, the already existing Events have been enhanced to include also monitoring of use of a directory object in a database, in this example a Home Subscriber Server HSS. If a user access a directory object in the HSS, the Interception Access Point IAP, i.e. the HSS, sends relevant data to DF2. This will later be explained in more detail. Examples of parameters in the IRI report when a directory object in the HSS is accessed are as follows:
- HSS Access Protocol: The protocol used to access the directory object, e.g. LDAP or Diameter SH
- HSS Operation: All protocol operations will be conveyed in this parameter, e.g. LDAP Message in case of LDAP or Commands in case of Diameter-Sh.
- HSS Directory Name: The name of the directory object that is accessed.

It is to be observed that those parameters above are only examples of possible parameters in the IRI report related to access to a directory object in the HSS.

In this embodiment of the invention the user has a telephony subscription and at least some of his user data stored in the HSS directory name HDN1. The user access HDN1 in the HSS via Internet Networks IN and a computer PC. He will activate the service call forwarding and forward his phone calls to number 12345. The target of the interception will be the directory name HDN1. The protocol used to access HDN1 is LDAP in this example.

The HSS is configured as an IAP. The HDN1 is associated to the Interception Access Point IAP, i.e. the HSS.

A method according to this embodiment of the invention will now be explained in more detail. The explanation is to be read together with figure 1 and 2. The method comprises the following steps:
- The Law Enforcement Agency LEA sends via interface H1 a request to the Administration Function ADMF to activate interception of user data stored at the HSS Directory Name HDN1. This means that directory object HDN1 will be monitored, it will be target of the interception.
- The ADMF forwards via interface X1 a target identity of the directory object HDN1, to the Interception Access Point IAP/HSS.
- A user access the Application Server AS from a computer PC via Internet Networks IN. He forwards a request to activate call forwarding.
- The Application Server AS communicates with the database HSS by the means of LDAP protocol. The Application Server AS provides the name of the directory object HDN1.
- The provided HSS directory name HDN1 is identified by the IAP/HSS as an intercepted target.
- The IRI parameters HSS directory name, i.e. HDN1, HSS Access Protocol, i.e. LDAP and HSS Operation, i.e. access to HDN1 and activate call forwarding to number 12345, are sent as Intercept Related Information IRI from the IAP to the Delivery Function DF2 via interface X2.
- The IRI is forwarded from DF2 to the LEA via interface H2.

Other steps are possible. For example there might be a step of identification of the user. The user does not have to be the subscriber himself, anyone could access the database and change a users profile. The steps above could also come in another order. It is e.g. flexible at what step the IAP will send IRI to the DF2.

The user access the Application Server AS from a PC. Any device that could access an AS could be used, another example is a WAP-mobile WM.

The access to the Application Server AS is in this example via Internet Networks. Any type of access to the AS could of course be possible.

The directory object HDN1 stores in this example user data for a subscriber. Any kind of data could of course be stored in the HDN1.

In the case of data related to a subscriber, the subscription could be of any type, e.g. data or telephony. This embodiment of the invention has activating call forwarding as an example, but of course any services or access to data in the HDN1 will be possible to intercept. Examples of communication with a database that could be intercepted are activating or de-activating, subscribe or unsubscribe and interrogating of any kind of service or subscription. Changes of users profile e.g. address change or changes of the billing method are other examples of data that could be intercepted.

The database, i.e. the HSS, could be situated and hosted anywhere in the network. HSS is of course one example of a database. Any database connected to the network would be possible. A database does not need a dedicated server but could be hosted by any node in the network. That node will then be the Interception Access Point IAP.

LDAP is one example of possible protocol to use for the access to the directory object in the HSS. Another example is Diameter-Sh. In the case of use of LDAP as HSS Access Protocol the HSS Directory Name corresponds to the LDAP Directory Name. HSS Operation will be coded as LDAP Message as specified in LDAP, RFC 2251. Examples of operations are bindRequest and bindRespons. In the case of use of Diameter-SH as HSS Access Protocol, HSS Operation will be coded as Commands as specified in TS 29.329 V6.1.0. Examples are User-Data-Request and User-Data-Answer.

The parameters in the IRI report mentioned above are only examples and other parameters are possible. Time and date of the operation are other examples of IRI parameters. If the access to the HDN1 fails, an Access Failure Reason could be forwarded from the IAP via the DF2 to the LEA. If an access code is used, that code could also be sent as IRI. It is also not necessary to include all events mentioned in the method above, just one IRI could be enough.

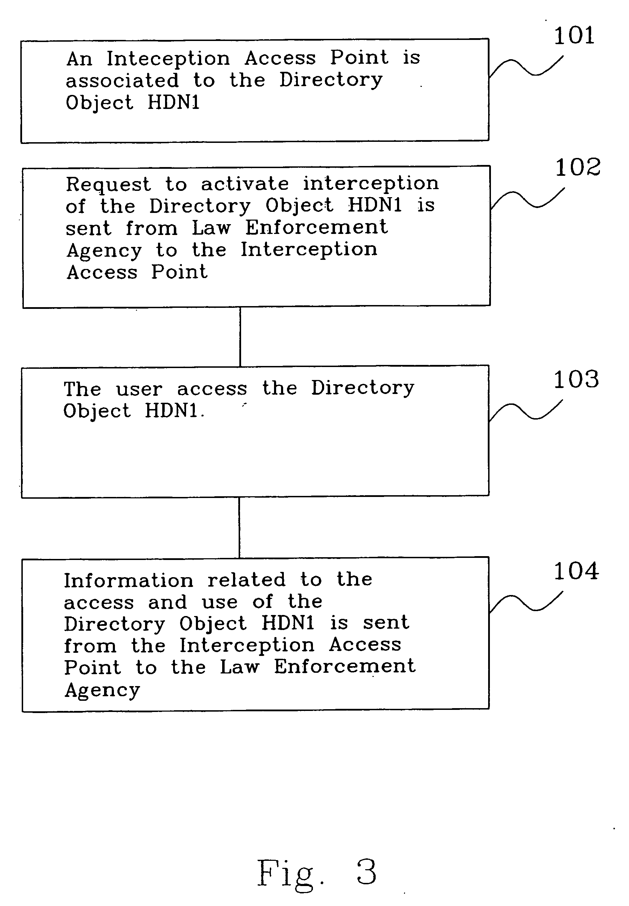

Figure 3 discloses a flowchart in which some more important steps are shown. The flowchart is to be read together with the earlier shown figures. The flowchart comprises the following steps:
- The Directory object HDN1 is associated to an Interception Access Point. A block 101 discloses this step in figure 3.
- The Law Enforcement Agency LEA sends a request to the Interception access point, to activate interception of the directory object HDN1. A block 102 discloses this step in figure 3.
- The user access the directory object HDN1. A block 103 discloses this step in figure 3.
- Information related to the access and use of HDN1 is sent from the IAP to the LEA. A block 104 discloses this step in figure 3

The invention is of course not limited to the above described and in the drawings shown embodiments but can be modified within the scope of the enclosed claims.

## Claims

1. A method to generate information related to access and use of a directory object (HDN1) in a database (HSS) in a communication system, which system is equipped with the database (HSS) and a directory object (HDN1) and which system is configured to provide to an Intercept Configuration Unit (ICU) information (IRI) collected from an Interception access point (HSS;IAP) whereby the Interception access point (HSS;IAP) is associated to the directory object (HDN1), which method comprises the following steps:
- receiving at the Interception access point (HSS;IAP) a request to monitor the directory object (HDN1),
- detection of use of the directory object at the Interception Access Point (HSS;IAP),
- delivering information (IRI) related to said use, from the Interception Access Point (HSS;IAP) to the Intercept Configuration Unit (ICU).

2. A method to generate information (IRI) according to claim 1 whereby the Intercept Configuration Unit (ICU) comprises a Law Enforcement Agency (LEA) attached to an Administration Function (ADMF), which method comprises the following further steps:
- sending from the Law Enforcement Agency (LEA) to the Administration Function (ADMF), the request to monitor the directory object (HDN1),
- forwarding the request from the Administration Function (ADMF) to the Interception Access Point (HSS; IAP).

3. A method to generate information (IRI) according to any of the claims 1 to 2 whereby the protocol used to communicate with the directory object (HDN1) is at least one of the following:
- Lightweight Directory Access Protocol LDAP,
- Sh interface based on the Diameter protocol DSH.

4. A method to generate information (IRI) according to any of claims 1 to 3 whereby the information delivered from the Interception Access Point (IAP) to the Intercept Configuration Unit (ICU) comprises at least one of the following data:
- Protocol used to access the database,
- Operation towards the database,
- Name of the database,
- Name of the directory object.

5. A method to generate information (IRI) according to any of claims 1 to 4 whereby the directory object comprises user data for a telecommunication service.

6. A method to generate information (IRI) according to any of the claims 1 to 5 whereby the directory object (HDN1) is stored in a Home Subscriber Server (HSS).

7. A method to generate information (IRI) according to any of the claims 1 to 6 whereby the communication system further comprises an application server (AS) and the directory object is accessed via said application server (AS).

8. A method to generate information (IRI) according to claim 7 whereby the application server (AS) is accessed via Internet Networks (IN).

9. An arrangement comprising an Interception access point to generate information related to access and use of a directory object (HDN1) in a database (HSS) in a communication system, which system is equipped with the database (HSS) and a directory object (HDN1) and which system is configured to provide to an Intercept Configuration Unit (ICU) information (IRI) collected from the interception access point (HSS;IAP) whereby the Interception access point (HSS;IAP) is associated to the directory object (HDN1), which arrangement further comprises:
- means for receiving at the Interception access point (HSS;IAP) a request to monitor the directory object (HDN1),
- means for detection of use of the directory object at the Interception Access Point (HSS;IAP),
- means for delivering information (IRI) related to said use, from the Interception Access Point (HSS;IAP) to the Intercept Configuration Unit (ICU);

10. An arrangement to generate information according to claim 9 whereby the Intercept Configuration Unit (ICU) comprises a Law Enforcement Agency (LEA) attached to an Administration Function (ADMF), which arrangement comprises:
- means for sending from the Law Enforcement Agency (LEA) to the Administration Function (ADMF), the request to monitor the directory object (HDN1),
- means for forwarding the request from the Administration Function (ADMF) to the Interception Access Point (IAP; HSS)

11. An arrangement to generate information (IRI) according to any of the claims 9 to 10 adapted such that the protocol used to communicate with the directory object (HDN1) is at least one of the following:
- Lightweight Directory Access Protocol LDAP,
- Sh interface based on the Diameter protocol DSH.

12. An arrangement to generate information (IRI) according to any of the claims 9 to 11 whereby the communication system further comprises an application server (AS) and that said application server (AS) comprises means adapted to access the directory object (HDN1).

13. An arrangement to generate information (IRI) according to claim 12 whereby the application server (AS) comprises means adapted to be accessed via Internet Networks (IN).

## Patentansprüche

1. Verfahren zur Erzeugung von Information, die mit dem Zugang zu einem Verzeichnisobjekt (HDN1) in einer Datenbank (HSS) in einem Kommunikationssystem und mit der Nutzung dieses Objekts im Zusammenhang steht, wobei dieses System mit der Datenbank (HSS) und einem Verzeichnisobjekt (HDN1) ausgestattet ist und entsprechend konfiguriert ist, um eine Abfangkonfigurationseinheits-(ICU-)Information (IRI) bereitzustellen, die von einem Abfangzugangspunkt (HSS; IAP) bezogen wird, wodurch der Abfangzugangspunkt (HSS; IAP) dem Verzeichnisobjekt (HDN1) zugeordnet ist, wobei das Verfahren die folgenden Schritte umfasst:
- am Abfangzugangspunkt (HSS; IAP) erfolgendes Empfangen einer Aufforderung zur Überwachung des Verzeichnisobjekts (HDN1),
- Ermittlung der Nutzung des Verzeichnisobjekts im Abfangzugangspunkt (HSS; IAP),
- Liefern von Information (IRI) im Zusammenhang mit dieser Nutzung vom Abfangzugangspunkt (HSS; IAP) an die Abfangkonfigurationseinheit (ICU).

2. Verfahren zur Erzeugung von Information (IRI) nach Anspruch 1, wodurch die Abfangkonfigurationseinheit (ICU) eine Strafverfolgungsbehörde (LEA) umfasst, die an eine Administrationsfunktion (ADMF) angeschlossen ist, wobei das Verfahren die folgenden weiteren Schritte umfasst:
- Senden der Aufforderung zur Überwachung des Verzeichnisobjekts (HDN1) von der Strafverfolgungsbehörde (LEA) an die Administrationsfunktion (ADMF),
- Weiterleiten der Aufforderung von der Administrationsfunktion (ADMF) an den Abfangzugangspunkt (HSS; IAP).

3. Verfahren zur Erzeugung von Information (IRI) nach einem der Ansprüche 1 bis 2, wodurch das Protokoll, das verwendet wird, um mit dem Verzeichnisobjekt (HDN1) zu kommunizieren, mindestens eines von Folgendem ist:
- Lightweight-Verzeichniszugangsprotokoll LDAP,
- Sh-Schnittstelle, die auf dem Diameter-Protokoll DSH beruht.

4. Verfahren zur Erzeugung von Information (IRI) nach einem der Ansprüche 1 bis 3, wodurch die Information, die vom Abfangzugangspunkt (IAP) an die Abfangskonfigurationseinheit (ICU) geliefert wird, mindestens die einen von folgenden Daten umfasst:
- Protokoll, das verwendet wird, um auf die Datenbank zuzugreifen,
- Operation in Richtung der Datenbank,
- Name der Datenbank,
- Name des Verzeichnisobjekts.

5. Verfahren zur Erzeugung von Information (IRI) nach einem der Ansprüche 1 bis 4, wodurch das Verzeichnisobjekt Nutzerdaten für einen Telekommunikationsdienst umfasst.

6. Verfahren zur Erzeugung von Information (IRI) nach einem der Ansprüche 1 bis 5, wodurch das Verzeichnisobjekt (HDN1) in einem Home Subscriber Server (HSS) gespeichert ist.

7. Verfahren zur Erzeugung von Information (IRI) nach einem der Ansprüche 1 bis 6, wodurch das Kommunikationssystem ferner einen Applikationsserver (AS) umfasst und über diesen Applikationsserver (AS) auf das Verzeichnisobjekt zugegriffen wird.

8. Verfahren zur Erzeugung von Information (IRI) nach Anspruch 7, wodurch über das Internet (IN) auf den Applikationsserver (AS) zugegriffen wird.

9. Anordnung mit einem Abfangzugangspunkt zur Erzeugung von Information, die mit dem Zugang zu einem Verzeichnisobjekt (HDN1) in einer Datenbank (HSS) in einem Kommunikationssystem und mit der Nutzung dieses Objekts im Zusammenhang steht, wobei dieses System mit der Datenbank (HSS) und einem Verzeichnisobjekt (HDN1) ausgestattet ist und entsprechend konfiguriert ist, um eine Abfangkonfigurationseinheits-(ICU-)Information (IRI) bereitzustellen, die vom Abfangzugangspunkt (HSS; IAP) bezogen wird, wodurch der Abfangzugangspunkt (HSS; IAP) dem Verzeichnisobjekt (HDN1) zugeordnet ist, wobei die Anordnung ferner umfasst:
- Mittel zum Empfangen einer Aufforderung zur Überwachung des Verzeichnisobjekts (HDN1) am Abfangzugangspunkt (HSS; IAP),
- Mittel zur Ermittlung der Nutzung des Verzeichnisobjekts im Abfangzugangspunkt (HSS; IAP),
- Mittel zum Liefern von Information (IRI) im Zusammenhang mit dieser Nutzung vom Abfangzugangspunkt (HSS; IAP) an die Abfangkonfigurationseinheit (ICU).

10. Anordnung zur Erzeugung von Information nach Anspruch 9, wodurch die Abfangkonfigurationseinheit (ICU) eine Strafverfolgungsbehörde (LEA) umfasst, die an eine Administrationsfunktion (ADMF) angeschlossen ist, wobei die Anordnung umfasst:
Administration Funktion (ADMF), die Anordnung umfasst Anspruch zu generieren:
- Mittel zum Senden der Aufforderung zur Überwachung des Verzeichnisobjekts (HDN1) von der Strafverfolgungsbehörde (LEA) an die Administrationsfunktion (ADMF),
- Mittel zum Weiterleiten der Aufforderung von der Administrationsfunktion (ADMF) an den Abfangzugangspunkt (IAP; HSS).

11. Anordnung zur Erzeugung von Information (IRI) nach einem der Ansprüche 9 bis 10, die so angepasst, dass das Protokoll, das verwendet wird, um mit dem VerzeichnisObjekt (HDN1) zu kommunizieren, mindestens eines von Folgendem ist:
- Lightweight-Verzeichniszugangsprotokoll LDAP,
- Sh-Schnittstelle, die auf dem Diameter-Protokoll DSH beruht.

12. Anordnung zur Erzeugung von Information (IRI) nach einem der Ansprüche 9 bis 11, wodurch das Kommunikationssystem ferner einen Applikationsserver (AS) umfasst und dieser Applikationsserver (AS) Mittel umfasst, die so angepasst sind, dass auf das Verzeichnisobjekt (HDN1) zugegriffen werden kann.

13. Anordnung zur Erzeugung von Information (IRI) nach Anspruch 12, wodurch der Applikationsserver (AS) Mittel umfasst, die so angepasst sind, dass über Internet-Netze (IN) auf diesen zugegriffen werden kann.

## Revendications

1. Procédé destiné à générer des informations connexes à l'accès et à l'utilisation d'un objet de répertoire (HDN1) dans une base de données (HSS) au sein d'un système de communication, lequel système est équipé de la base de données (HSS) et d'un objet de répertoire (HDN1) et lequel système est configuré de manière à fournir à une unité de configuration d'interception (ICU) des informations (IRI) collectées à partir d'un point d'accès d'interception (HSS ; IAP), moyennant quoi le point d'accès d'interception (HSS ; IAP) est associé à l'objet de répertoire (HDN1), lequel procédé comporte les étapes ci-dessous consistant à :
- recevoir, au niveau du point d'accès d'interception (HSS ; IAP) une demande visant à surveiller l'objet de répertoire (HDN1) ;
- détecter l'utilisation de l'objet de répertoire au niveau du point d'accès d'interception (HSS ; IAP) ;
- fournir les informations (IRI) connexes à ladite utilisation, du point d'accès d'interception (HSS ; IAP) à l'unité de configuration d'interception (ICU).

2. Procédé destiné à générer des informations (IRI) selon la revendication 1, moyennant quoi l'unité de configuration d'interception (ICU) comprend un service chargé de l'application de la loi (LEA) attaché à une fonction d'administration (ADMF), lequel procédé comprend les étapes supplémentaires ci-dessous consistant à :
- envoyer, du service chargé de l'application de la loi (LEA) à la fonction d'administration (ADMF), la demande visant à surveiller l'objet de répertoire (HDN1) ;
- acheminer la demande de la fonction d'administration (ADMF) au point d'accès d'interception (HSS ; IAP).

3. Procédé destiné à générer des informations (IRI) selon l'une quelconque des revendications 1 à 2, moyennant quoi le protocole utilisé pour communiquer avec l'objet de répertoire (HDN1) est au moins l'un des suivants :
- un protocole léger d'accès au répertoire, LDPA ;
- une interface Sh basée sur le protocole « Diameter », DSH.

4. Procédé destiné à générer des informations (IRI) selon l'une quelconque des revendications 1 à 3 moyennant quoi les informations délivrées du point d'accès d'interception (IAP) à l'unité de configuration d'interception (ICU) comportent au moins l'une des données ci-dessous :
- le protocole utilisé pour accéder à la base de données ;
- l'opération vers la base de données ;
- le nom de la base de données ;
- le nom de l'objet de répertoire.

5. Procédé destiné à générer des informations (IRI) selon l'une quelconque des revendications 1 à 4, moyennant quoi l'objet de répertoire comprend des données utilisateur pour un service de télécommunication.

6. Procédé destiné à générer des informations (IRI) selon l'une quelconque des revendications 1 à 5, moyennant quoi l'objet de répertoire (HDN1) est stocké dans un serveur d'abonnés résidentiels (HSS).

7. Procédé destiné à générer des informations (IRI) selon l'une quelconque des revendications 1 à 6, moyennant quoi le système de communication comprend en outre un serveur d'application (AS) et l'objet de répertoire est accessible via ledit serveur d'application (AS).

8. Procédé destiné à générer des informations (IRI) selon la revendication 7, moyennant quoi le serveur d'application (AS) est accessible via des réseaux Internet (IN).

9. Agencement comprenant un point d'accès d'interception, destiné à générer des informations connexes à l'accès et à l'utilisation d'un objet de répertoire (HDN1) dans une base de données (HSS) au sein d'un système de communication, lequel système est équipé de la base de données (HSS) et d'un objet de répertoire (HDN1) et lequel système est configuré de manière à fournir à une unité de configuration d'interception (ICU) des informations (IRI) collectées à partir du point d'accès d'interception (HSS ; IAP) moyennant quoi le point d'accès d'interception (HSS ; IAP) est associé à l'objet de répertoire (HDN1), lequel agencement comprend en outre :
- un moyen pour recevoir, au niveau du point d'accès d'interception (HSS ; IAP) une demande visant à surveiller l'objet de répertoire (HDN1) ;
- un moyen pour détecter l'utilisation de l'objet de répertoire au niveau du point d'accès d'interception (HSS ; IAP) ;
- un moyen pour fournir les informations (IRI) connexes à ladite utilisation, du point d'accès d'interception (HSS ; IAP) à l'unité de configuration d'interception (ICU).

10. Agencement destiné à générer des informations selon la revendication 9, moyennant quoi l'unité de configuration d'interception (ICU) comprend un service chargé de l'application de la loi (LEA) attaché à une fonction d'administration (ADMF), lequel agencement comprend :
- un moyen pour envoyer, du service chargé de l'application de la loi (LEA) à la fonction d'administration (ADMF), la demande visant à surveiller l'objet de répertoire (HDN1) ;
- un moyen pour acheminer la demande de la fonction d'administration (ADMF) au point d'accès d'interception (HSS ; IAP).

11. Agencement destiné à générer des informations (IRI) selon l'une quelconque des revendications 9 à 10, adapté de sorte que le protocole utilisé pour communiquer avec l'objet de répertoire (HDN1) est au moins l'un des suivants :
- un protocole léger d'accès au répertoire, LDPA ;
- une interface Sh basée sur le protocole « Diameter », DSH.

12. Agencement destiné à générer des informations (IRI) selon l'une quelconque des revendications 9 à 11, moyennant quoi le système de communication comprend en outre un serveur d'application (AS) et ledit serveur d'application (AS) comprend un moyen apte à accéder à l'objet de répertoire (HDN1).

13. Agencement destiné à générer des informations (IRI) selon la revendication 12, moyennant quoi le serveur d'application (AS) comprend un moyen apte à être accessible via les réseaux Internet (IN).
